# EUROPEAN PATENT SPECIFICATION

(11) **EP 3 613 685 B1**
(45) Date of publication and mention of the grant of the patent: **21.07.2021**
(21) Application number: 19460044.1
(22) Date of filing: 08.08.2019
(51) Int. Cl.: B65G 69/34, B60T 3/00

(54) **WHEEL LOCK SYSTEM FOR IMMOBILISING TRUCKS AT A LOADING RAMP**
RADBLOCKIERSYSTEM ZUR IMMOBILISIERUNG VON LKW AN LADERAMPE
SYSTÈME DE VERROUILLAGE DE ROUE POUR L'IMMOBILISATION DE CAMIONS À UNE RAMPE DE CHARGEMENT

(30) Priority: 20.08.2018 PL 42671318
(43) Date of publication of application: 26.02.2020
(73) Proprietor: Chawchunowicz, Lukasz, 59-800 Luban (PL)
(72) Inventor: Chawchunowicz, Lukasz, 59-800 Luban (PL)

(56) References cited:
- FR-A1- 2 988 058
- US-A1- 2002 141 852
- US-B2- 8 869 948

## Description

The subject of the invention is a wheel lock system applicable to immobilising trucks at a loading ramp. The wheel lock system is a stand-alone device, independent from the vehicle.
Patent literature includes many technical solutions that refer to the issue of immobilisation of trucks that dock at a ramp. The known designs of these devices are correct and they operate in an adequate manner. However, there can be observed certain maintenance issues as well as inconveniences related mainly to a bad condition of surface in the docking location as well as other causes.
Deformed surface may cause issues in the case of guide-based lock devices placed directly on this kind of surface and fixed to it. Surface deformation may have a negative impact on the operation of such locks. Other negative factors may include climate impacts, such as cases when a guide located on the surface is covered with ice and/or snow, as well as impact of dirt, sand, mud and gravel contamination. Guides located on the surface are present, for instance, in patent descriptions no.US8590673 and US6524053.
Another inconvenience of the known solutions is the susceptibility to damage the device in the case of an inadvertent start of the truck and exert pressure on the device in locked mode. In such cases, trucks with high powered engines may deform and damage lock components, which may make it impossible to remove the wheel lock or even destroy the device. The patent description US6773221 may serve as a relevant example here. US2002141852 A1 discloses the preamble of claim 1.

In order to eliminate inconvenient maintenance issues in the known devices, a wheel lock system has been developed, which consists of a frame in the form of a massive beam supported by brackets and a trolley located on this frame with a locking arm installed using a pinned connection in the body. Locking arm in operating position is positioned horizontally and its position is set by a ratchet mechanism. The frame has a line of evenly spaced holes along its axis, which enables setting the trolley in a desired location using an arm locking pin introduced into one of the holes in the frame. Holes in the frame are oval shaped or in a shape approximate to oval.
The lock trolley is equipped with a system of load-bearing rollers: upper, side and lower. These rollers are made of a flexible material and their task is to lead the trolley with its protection against disengagement upwards and sideways. Roller assemblies are installed on springs.

The device is equipped with a ratchet locking system that keeps the locking arm in the position of use. The ratchet locking system with an electrical actuator prevents the deactivation of the wheel lock when the dock gate is not closed. The locking system prevents the opening of the dock gate when the locking arm is in the resting position (vertical).

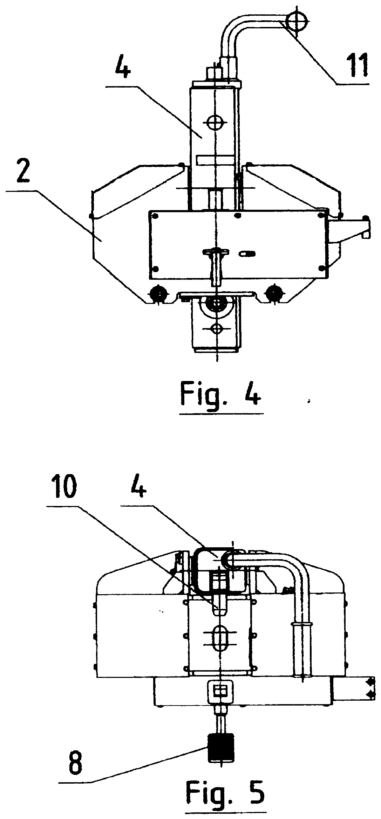

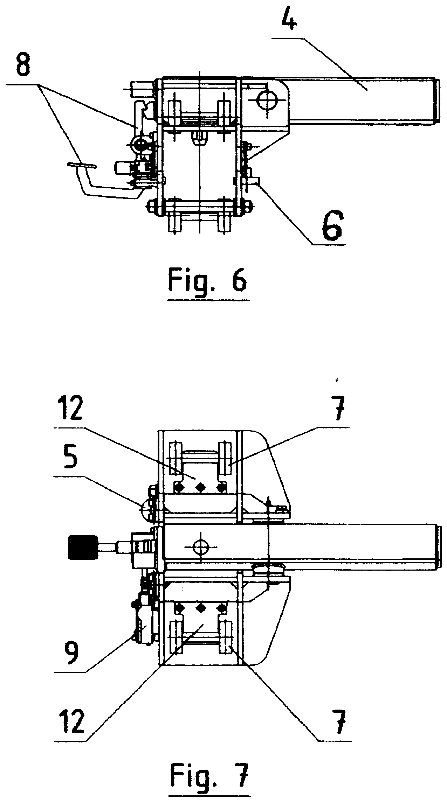

The wheel lock system according to the invention is synchronised with a warning lights system and with a dock gate drive according to the known solutions. The wheel lock system is also equipped with a wheel presence sensor so as not to allow the lock to be present outside the truck wheel assembly. Beneficial results of the invention involve obtaining a significant resilience of the lock system to damage resulting from deformation caused by pressure exerted by truck wheels thanks to the application of an assembly of load-bearing, flexible rollers of the lock trolley and oval holes in the frame, which makes it possible to move the pin as the rollers bend. The flexibility of the assembly is additionally provided by placing the roller assemblies on flat springs. Placing the trolley and the frame on brackets so that they are at a similar level to the truck wheel axis effectively protects the device against climate factors and contamination.
An example of the invention is presented in the figures. Fig. 1 presents side view of the wheel lock system in the version coupled with a wheel guide, Fig. 2 presents this system in a top view, Fig. 3 presents a cross-section of the system along the A-A line, where the locking arm is presented both in the operating position (horizontal) and the resting position (vertical), Fig. 4 presents a side view of the lock trolley, whereas the locking arm is in the resting position (vertical), Fig. 5 presents a top view of the lock trolley, wherein the locking arm is in the resting position, Fig. 6 presents a side view of the trolley with the lever in the operating position, while Fig. 7 presents a top view of the lock trolley with the lever raised to the operating position.

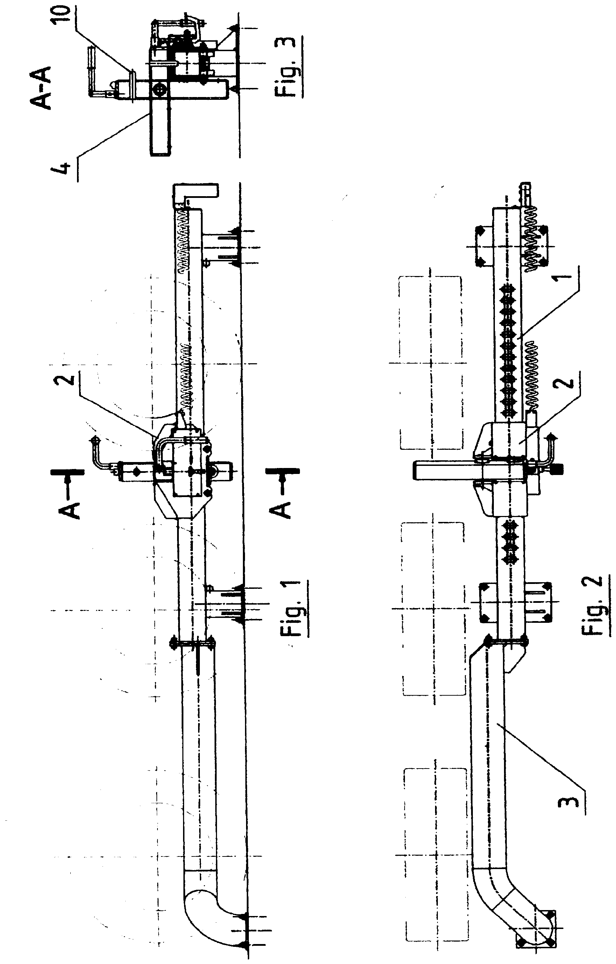

The wheel lock system presented in Fig. 1 and 2 is integrated with wheel guide 3, in a steel version. After introducing the truck trailer under the unloading ramp wheel lock trolley 2 is manually set along frame 1, using handle 11 to the desired position so that the lock is engaged between the trailer wheels.

Setting locking arm 4 to the operating position is carried out using the same handle 11. Locking arm 4 in operating position (horizontal) is secured with a ratchet 8, with a simultaneous setting of the position of trolley 2 by introducing pin 10 into the nearest oval hole in frame 1.

Setting the wheel lock system in the operating position enables the dock gate to be opened, but when the lock is secured using pin 9 that immobilises ratchet assembly 8. Closing the dock gate releases pin 9, which makes it possible to disengage the lock assembly by putting arm 4 into vertical position.

## Claims

1. Wheel lock system including a frame (1) and a moving lock trolley (2), wherein the frame (1) has a line of evenly spaced holes along its axis, **characterised in that** the lock trolley (2) is equipped with a locking arm (4) attached to the trolley body (2) using a pinned connection and a load-bearing roller assembly (5, 6, 7), a ratchet assembly (8) along with the ratchet lock assembly (9), while the locking arm (4) is equipped with a pin (10) that sets the trolley (2) location in the operating position of the lock, where the frame holes (1) have an oval shape, or have a shape approximate to oval and the load-bearing roller assemblies (5, 6, 7) are made of a flexible material.

2. System acc. to claim 1 **characterised in that** the ratchet lock mechanism (9) is made in a form of a pin, controlled beneficially using an actuator.

3. System acc. to claim 1, **characterised in that** the roller assemblies of the trolley (2) include upper (5), side (6) and lower assembly of rollers (7).

4. System acc. to claims 1 or 3, **characterised in that** the load-bearing rollers (5, 6, 7) are beneficially ball-bearing mounted.

5. System acc. to claims 1 or 4, **characterised in that** the roller assemblies (5, 6, 7) are installed on springs (12).

## Patentansprüche

1. Radverriegelungsbaugruppe, die einen Rahmen (1) und einen beweglichen Verriegelungswagen (2) umfasst, wobei der Rahmen (1) eine Anzahl von Öffnungen aufweist, die gleichmäßig entlang seiner Achse ausgeführt sind, **dadurch gekennzeichnet, dass** der Verriegelungswagen (2) mit einem Verriegelungsarm (4), der im Gehäuse des Wagens (2) angelenkt verbaut ist, und Tragrollenbaugruppen (5, 6, 7), einer Klinkenbaugruppe (8) zusammen mit einer Klinkenverriegelungsbaugruppe (9) ausgestattet ist, wobei der Verriegelungsarm (4) mit einem Stift (10) versehen ist, der die Position des Wagens (2) in der Verriegelungsbetriebsstellung fixiert, während die Öffnungen des Rahmens (1) eine ovale oder nahezu ovale Form haben und die Tragrollenbaugruppen (5, 6, 7) aus elastischem Material bestehen.

2. Baugruppe nach Anspruch 1, **dadurch gekennzeichnet, dass** die Klinkenverriegelungsbaugruppe (9) in Form eines Stiftes ausgeführt ist, der vorzugsweise durch einen elektrischen Stellmotor gesteuert wird.

3. Baugruppe nach Anspruch 1, **dadurch gekennzeichnet, dass** die Wagenrollenbaugruppen (2) obere Rollenbaugruppen (5), seitliche Rollenbaugruppen (6) und untere Rollenbaugruppen (7) umfassen.

4. Baugruppe nach Anspruch 1 oder 3, **dadurch gekennzeichnet, dass** die Tragrollen (5, 6, 7) vorzugsweise wälzgelagert sind.

5. Baugruppe nach Anspruch 1 oder 4, **dadurch gekennzeichnet, dass** die Rollenbaugruppen (5, 6, 7,) auf Flachfedern (12) verbaut sind.

## Revendications

1. Ensemble de blocage de roue comprenant un cadre (1) et un chariot de blocage mobile (2), dans lequel le cadre (1) présente un certain nombre d'ouvertures pratiquées régulièrement le long de son axe, **caractérisé en ce que** le chariot de blocage (2) est équipé d'un bras de blocage (4) articulé dans le corps du chariot (2) et d'ensembles de rouleaux de support (5, 6, 7) un ensemble de cliquet (8) conjointement avec l'ensemble de verrouillage à cliquet (9), dans lequel le bras de verrouillage (4) est muni d'une goupille (10) fixant la position du chariot (2) dans la position de fonctionnement de verrouillage, tandis que les ouvertures du cadre (1) sont de forme ovale ou presque ovale et que les ensembles de rouleaux de support (5, 6, 7) sont réalisés en matériau élastique.

2. Ensemble selon la revendication. 1, **caractérisé en ce que** l'ensemble de verrouillage du cliquet (9) est réalisé sous la forme d'une goupille commandée, de préférence, par un actionneur électrique.

3. Ensemble selon la revendication. 1, **caractérisé en ce que** les ensembles de rouleaux de chariot (2) comprennent des ensembles de rouleaux supérieurs (5), des ensembles de rouleaux latéraux (6) et un ensemble de rouleaux inférieurs (7).

4. Ensemble selon la revendication. 1 ou 3, **caractérisé en ce que** les rouleaux de support (5, 6, 7) sont, de préférence, des roulements.

5. Ensemble selon la revendication. 1 ou 4, **caractérisé en ce que** les ensembles de rouleaux (5, 6, 7) sont montés sur des ressorts plats (12).
